# EUROPEAN PATENT APPLICATION

(11) **EP 0 986 992 A2**
(43) Date of publication of application: **22.03.2000**
(21) Application number: 99202994.2
(22) Date of filing: 14.09.1999
(51) Int. Cl.: A61C 1/00

(54) **Base module with a compact structure to be used in dental devices**

(30) Priority: 16.09.1998 IT MI980609
(71) Applicant: Nardo, Mario, 20040 Bellusco, Milan (IT)
(72) Inventor: Nardo, Mario, 20040 Bellusco, Milan (IT)
(74) Representative: Zanardo, Giovanni

(57) **Abstract**

A base module with a compact structure to be used in dental devices, which in particular is suitable for dental assemblies, for control of instruments, in which, on the base module, there can be positioned a series of head blocks with a membrane interposed, the base block and the head blocks containing a plurality of apertures for supply and circulation of power and service air, and water, which can be connected selectively, characterised in that the said base module is produced in a single block by means of extrusion, and can be cut to size according to the number of head blocks to be associated with it.

## Description

The present invention relates to a base module with a compact structure to be used in dental devices, which in particular is suitable for dental assemblies.

It is known that in dental devices, in particular in the so-called "assemblies" in which there are provided all the operative units which can be used by the dentist, control units for the various functions are provided.

In particular, there are provided numerous valve units, which can be used both in the auxiliary devices for actuation of the various work instruments (drills, burrs, jets of water, suction of water and saliva etc.), and in the auxiliary devices which are dedicated to carrying out the support functions, such as movement of the chair and the like.

From the foregoing information, it is apparent that it is necessary to have available both service air, and power, generally at 5 bars and 3 bars, and water for washing and spraying, or to be supplied to an appropriate glass.

At present, in order to produce control units, for ease both of assembly and maintenance, use has become popular of individual valve modules, which can be fitted extremely easily, and in the quantities required.

Although on the one hand, these modules make it possible to produce a general control unit which is extremely compact once the modules have been disposed in the units which are requested and required, but on the other hand they are costly and complex, because they are produced using a large number of parts.

In addition, the presence itself of all these component parts requires numerous seals, corresponding to the numerous connections which can generate points of leakage from the circuit.

The object of the present invention is to eliminate as far as possible the leakages from a complete control module for a dental assembly or a similar device, at the same time also decreasing the number of parts which are present in the module.

Another object of the invention is to keep the size and the number of outputs down to a minimum, whilst retaining the functionality of the units available hitherto.

Another object is to provide a control module for dental devices which is perfectly interchangeable with the present modules in use, such as to avoid generating additional problems of storage and stocks for the distributors of these components of the circuit.

These objects of the present invention are achieved by using a base module with a compact structure, to be used in dental devices, which in particular is suitable for dental assemblies, for control of instruments, in which, on the base module, there can be positioned a series of head blocks with a membrane interposed, the base block and the head blocks containing a plurality of apertures for supply and circulation of power and service air, and water, which can be connected selectively, characterised in that the said base module is produced in a single block by means of extrusion, and can be cut to size according to the number of head blocks to be associated with it.

The characteristics and advantages of a base module according to the present invention, with a compact structure, to be used in dental devices, which in particular is suitable for dental assemblies, will become more apparent from the following description, provided by way of non-limiting example, with reference to the attached drawings, in which:
Figure 1 is a perspective view of the body of the base module alone, in its rough form when it has just been extruded, before it has been worked and cut to the size required;
Figure 2 is a plan view from above of a complete control module, which uses a base module according to the present invention, in a size which can accommodate four head modules; and
Figure 3 is an elevated lateral view of the module according to the invention, in figure 2.

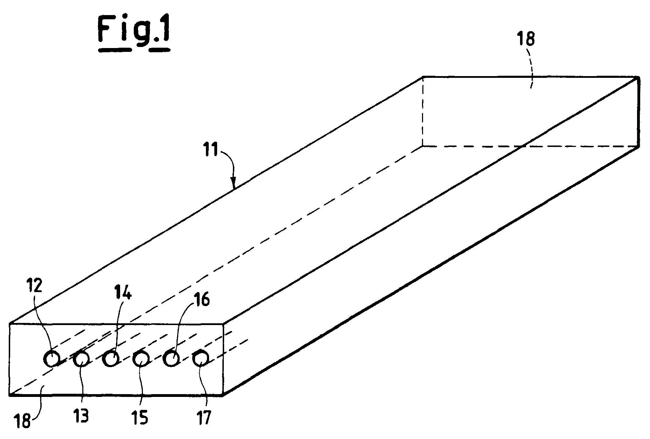

As can be seen in figure 1, a base module with a compact structure, to be used in dental devices, which in particular is suitable for dental assemblies, is produced from a single block of metal or suitable plastics material, by means of extrusion. For example, an aluminium alloy or similar material is used, which is extruded such that, in a continuous body 11, there is produced a series of six holes 12-17, which are also continuous, which extend longitudinally in the body 11, from one end surface 18 to the other.

The body 11 is shown as a moderate size in figure 1, but can be produced in bars, each of which can have an overall length of up to 5-7 m. It will be appreciated the continuous bar can then be cut to size, according to the number of head blocks to be associated with it, once the bar has been worked and provided with the other holes in the other surfaces, in order to produce the connections for the water and air.

This therefore provides a continuous body 11, of a flattened parallelepiped type, which has in its end surfaces 18 six holes 12-17, and has in its other surfaces a plurality of through- and connection-apertures, of a number which depends on the requirements.

It should be noted that a first pair of longitudinal through-holes 13 and 12 is provided respectively for the supply of power air, for example at 3 bars, and for water for the specific uses.

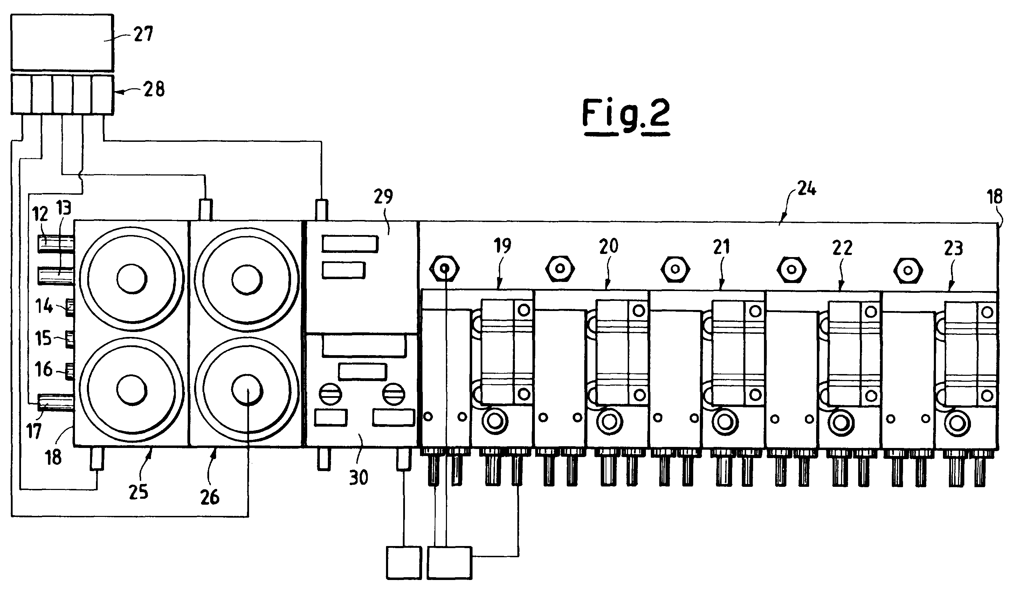

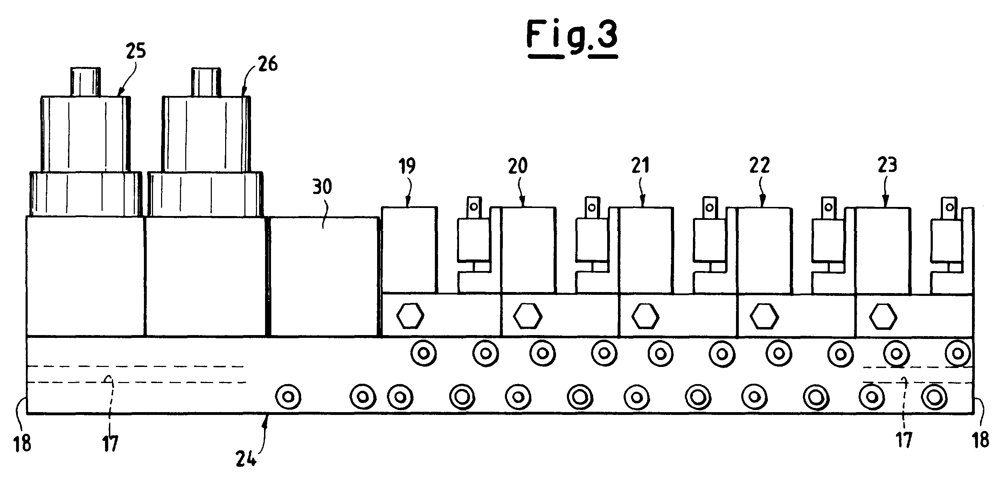

The additional longitudinal holes 14-17 act as a connection with further connection apertures between various head modules, of which five are schematised in figures 2 and 3, are indicated as 19-23 as a whole, and are disposed side by side with one another on the base module, which is indicated as 24, and is cut from the continuous body 11, to the appropriate size.

It can thus be seen that both the head blocks 19-23 and the said base block 11, i.e. the base module 24 obtained from the latter, have a parallelepiped shape.

The head modules 19-23 act as connectors between the base module, i.e. the water and air power lines, and two reduction units 25 and 26, which are also disposed on the base module 24.

These head modules 19-23 can be provided with, or can be without a micro-switch or a solenoid valve, according to the various uses. In addition, there is provided a pedal unit 27, which is connected by means of a control unit, shown schematically as 28, to the various head modules 19-23, and from there to the various instruments and other tools (not shown) which are part of the dental assembly.

Some of these connections, which are of a known type, are schematised in figure 2 itself.

Finally, there is provided a further pair of valves 29 and 30, one for the water and the other in order to permit connection of a syringe, not shown.

It is apparent that by means of a base module 24, which is obtained as previously described, and can be adapted to a specific use according to the type of dental assembly or similar device to be obtained, the entire structure is greatly simplified.

This therefore eliminates component parts and connections, thus requiring less working of the modules according to the present invention.

In these base modules, which can be produced in the size which is required and necessary, but always from a single, similar, continuous base block, it is necessary simply to produce the surface connection holes between the base module and the individual head module, and to provide the membrane which determines and permits the connections.

By this means, the presence of fewer apertures, and closed service holes used in order to produce these apertures, decreases the possibility of leakages and malfunctioning.

In addition, there is a considerable decrease in the processing costs, and it is easier to fit the various components which constitute the control unit of the dental device or assembly.

There is advantageous elimination of the need to produce several individual modules, which must then be connected to each other at expense, with complications of installation, an increase in the possibility of leakages etc.

It will be appreciated that to each head module there can be connected controls both of the pneumatic and electric type, such as micro-switches, and additionally, solenoid valves or pneumatic microswitches can be connected in a similar manner.

This therefore advantageously eliminates all the connections between the various basic modules, each of which supports a respective head module.

By this means, there is complete elimination of all the problems of sealing and of the corresponding accessories, which are associated with the positioning of these individual modules.

In addition, as well as reduction of the costs of both production and assembly of the various parts, there is elimination of some of the parts which previously had to be kept in stock. This therefore creates a smaller stock of parts, and a greater possibility of producing base modules of any size and for any number of head modules.

## Claims

1. Base module with a compact structure to be used in dental devices, which in particular is suitable for dental assemblies, for control of instruments, in which, on the base module (24), there can be positioned a series of head blocks (19-23) with a membrane interposed, the base block (24) and the head blocks (19-23) containing a plurality of apertures for supply and circulation of power and service air, and water, which can be connected selectively, characterised in that the said base module (24) is produced in a single block (11) by means of extrusion, and can be cut to size according to the number of head blocks (19-23) to be associated with it.

2. Base module according to claim 1, characterised in that, in the said single block (11) there is provided by means of extrusion a series of holes (12-17), which are also continuous, and extend longitudinally in the said body (11) from one end surface (18) to the other.

3. Base module according to claim 2, characterised in that there are six (12-17) in the said series of holes, of which two holes (13, 12) are produced respectively for the supply of power air and water for the specific uses.

4. Base module according to any one of the preceding claims, characterised in that both the said head blocks (19-23) and the said base block (11) have a parallelepiped shape.
